(19)

**Europäisches Patentamt**
**European Patent Office**
**Office européen des brevets**

(11)  **EP 4 589 160 A1**

(12)  **EUROPEAN PATENT APPLICATION**
published in accordance with Art. 153(4) EPC

(43) Date of publication:
**23.07.2025 Bulletin 2025/30**

(21) Application number: **23864190.6**

(22) Date of filing: **14.09.2023**

(51) International Patent Classification (IPC):
**F16C 7/00** *(2006.01)*    **F16C 7/02** *(2006.01)*

(52) Cooperative Patent Classification (CPC):
**F16C 7/02;** F16C 7/00

(86) International application number:
**PCT/BR2023/050306**

(87) International publication number:
**WO 2024/055090 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022  BR 102022018415**

(71) Applicant: **Vetorialflex Technologia Mecânica
Ltda. Me
29110-070 Vila Velha - ES (BR)**

(72) Inventor: **DARIVA, Antonio
29100-330 Vila Velha - ES (BR)**

(74) Representative: **Calysta NV
Lambroekstraat 5a
1831 Diegem (BE)**

(54)  **CONNECTING ROD FOR COMBUSTION ENGINE, PISTON ASSEMBLY FOR COMBUSTION ENGINE, AND COMBUSTION ENGINE**

(57)    This invention refers to a connecting rod (10) for a combustion engine equipped with an upper bore (10A) configured to be associated with a piston (20) and a lower bore (10B) configured to be concentrically associated with a crankshaft pin (31), the connecting rod (10) being configured according to a first ratio R1 and a second ratio R2, established by the following formulas: R1=La/Lb; R2=La/Lc; wherein: "La" is a distance taken from the center of the upper hole (10A) to the center of the lower hole (10B); "Lb" is a distance taken between an upper horizontal axis (Ha) that passes through the center of the upper hole (10A) and the horizontal axis of the center of gravity (Hcg); and "Lc" is a distance between a vertical axis (V) that passes through the center of the upper and lower holes (10A, 10B) and a vertical axis (Vcg) that passes through the center of gravity (CG) of the connecting rod (10); where the first ratio (R1) has a value between 1.2 and 1.5, preferably 1.4 to 1.5, and the second ratio (R2) has a value between 14 and 70, preferably 17 to 56, allowing the connecting rod and piston assembly to be applied to any commercially available engine to provide increased power, increased fuel efficiency, reduction of friction inside the cylinder during operation, and reduction of pollutant gas emissions.

**EP 4 589 160 A1**

## Description

The present invention refers to a connecting rod and a piston assembly whose configuration and arrangement allow them to be applied in any commercially available engine to provide increased power, increased fuel efficiency, reduced friction inside the cylinder during operation, and reduced emission of polluting gases.

## Description of the State of the Art

Internal combustion engines were created around 1770, and in 1860 the first drive unit for vehicles was developed with the invention of the internal combustion engine by the Belgian Etienne Lenoir, an invention that accompanies us to this day. However, with regard to its operating principle, it has not undergone significant changes over time, that is, the principle of burning an air-fuel mixture inside a cylinder is maintained, which generates pressure that moves the pistons and, by means of connecting rods, makes a crankshaft rotate, producing torque to perform mechanical work.

Thermodynamically, the compression ratio in internal combustion engines is directly responsible for the thermal efficiency of the engine. The higher the compression ratio, the higher the energy yield and the more uniform the average effective pressure in the process of expanding the gases inside the cylinder, generating greater power and torque. The great challenge for engine manufacturers today is how to increase the compression ratio without detonation occurring during the mixture compression process applied to the Otto Cycle or the air compression applied to the diesel cycle.

Early detonation is related to the rapid combustion of the mixture and manifests itself when the piston is in the compression phase and this mixture ignites before the piston reaches the ideal point, which is usually designed to occur a few degrees before the top dead center (TDC) of the piston. When detonation occurs, an increase in pressure is generated that causes resonance in the combustion chamber and its structure vibrates, emitting a noise known as "knock."

During detonation, there are pulses of extremely high pressures opposing the rotational movement of the engine and very high vibratory frequencies, factors that cause premature wear between the fixed and moving components of the engine, loss of performance, high fuel consumption, increased emissions of pollutants, and, depending on the degree, can lead to serious damage to the engine.

Basically, detonation is a result of high compression ratios, low-octane fuel, ignition timing advance, high temperatures, and carbon buildup on the piston surface or in the cylinder head chamber.

The state of the art regarding internal combustion engines presents attempts to increase the power/efficiency of engine operation, particularly seeking this increase in efficiency through modifications in the structure of the piston connecting rod, or even in the connecting rod-piston-crank assembly.

For example, document RU2442912 presents a connecting rod embodiment with a domed shape, the objective of which is to take advantage of the type of crank without increasing the size of both the crank and the device as a whole. The objective of RU2442912 is to reduce the normal component of excess gas pressure on the piston with an increase in the useful tangential component that creates torque on the crankshaft.

In another example of the state of the art, document CN 2373616 refers to a component (connecting rod) for energy saving in an internal combustion piston engine. Its objective is to increase the torsional force moment of a crankshaft connecting rod and achieve the objectives of increasing power and saving fuel.

In another example of the state of the art, the document KR 20030033528 refers to an eccentric connecting rod and a crank device that are provided to increase the power of an engine supposedly without altering the engine structure, by lengthening a crank arm when the piston force is transferred to the crank device.

In another example of the state of the art, the document WO2009100586 or US6460505 discloses an internal combustion engine equipped with a connecting rod featuring an eccentric lower orifice in relation to the rod shaft, aiming for torque gain during the piston's descent and reduction of energy consumption during the ascent.

In another example of the state of the art, document US4945866 discloses engine configurations where the cylinder centerline is offset in relation to the crankshaft axis of rotation, the purpose being to suppress premature detonations and increase engine efficiency.

However, despite the numerous attempts to seek an increase in efficiency, the state-of-the-art engines remain relatively inefficient due to multiple problems that persist in their construction, applications, and operation.

Particularly with regard to connecting rods, a first problem lies in the fact that the forces resulting from explosions in the engine chamber are distributed over the piston assembly in an inefficient manner. For example, in traditional connecting rods, at the top dead center of the crankpin, the connecting rod shaft is vertically positioned, aligned over the crankpin and the trunnion, meaning it discharges all the force of the explosion onto the crankpin and the trunnion, reducing the lifespan of the assembly and increasing the risk of breakage. Still in traditional connecting rods, the beginning of the ignition of the chamber (which occurs slightly before the crankpin reaches its maximum height point) tends to force the crankshaft to rotate in the opposite direction, since the traditional connecting rod is positioned at an unfavorable angle at the beginning of the ignition.

In other connecting rods with an eccentric lower hole, such as the one seen in US6460505, other problems can also be observed. For example, although US6460505 suggests that its connecting rod can be used in any engine, it can be seen from figure 3 that the ignition illustrated there occurs only after the crankpin has exceeded its maximum height point, which does not occur in conventional engines, where the ignition occurs slightly before the crankpin's maximum height point. It is also observed from figure 3 of US6460505 that the general shape of the connecting rod implies an undesirable proximity of the connecting rod shaft to the cylinder walls, which results in a risk of collision. In addition, document US6460505 suggests that an eccentricity of the lower orifice would be desirable, but this is not necessarily correct: problems may arise from arbitrarily chosen eccentricities, for example, an undesirable distribution of forces on the crankpin or trunnion, or an undesirable Radius-Length (R/L) factor.

In this sense, it is known that, in all engine designs, a Radius-Length or R/L factor has to be respected. Said R/L factor is the division of half of the crankshaft stroke (or the radius measured between the center of the trunnion and the center of the crankpin of the crankshaft) by the length of the connecting rod (measured between its upper and lower holes). Such R/L factor needs to be within a desirable range for certain vehicles so that there is no impairment in vibration, efficiency, and structural integrity of the engine assembly. However, in state-of-the-art engines observed, especially those with altered connecting rods such as US6460505, the connecting rods exceed the R/L factor and it cannot be adjusted properly due to the dimensional limitations of the piston assembly itself. For example, in the connecting rods disclosed in documents US6460505, CN2373616, and KR20030033528, applications in existing engines result in an R/L ratio that exceeds the ideal limits, causing a loss of all engine power and reducing its useful life, posing a risk of breakage of the assembly.

In addition, in the connecting rod traditionally used in current engines, a positive energy is observed, which is the chemical combustion of the engine, and a negative energy, which is the displacement at the center of the shaft. This creates, at the moment of the explosion, a crushing in the bushing, resulting in lost energy due to the center being aligned at the 0° degree position in the center of the shaft. Even in engines with a misaligned trunnion center, as seen in documents WO2009100586, US6460505, and US4945866, there are no teachings on an ideal connecting rod construction to achieve the supposed benefits proposed by each one. In the prior documents considered, a generic concept of misalignment of the connecting rod is cited, the application of which is impaired by the lack of clear and objective information about its construction.

Another problem observed in the state of the art is the high occurrence of vibrations during engine operation. Much of the vibrations in the piston cylinder occur due to the lateral forces acting on the cylinder walls, caused by the piston. Such forces are mainly caused during the ascent of the piston, during compression and/or exhaust, due to the unfavorable angle of the connecting rod during the ascent. Engines with traditional connecting rods exhibit this problem significantly, and engines with arbitrarily chosen eccentric lower orifice connecting rods can even exacerbate the issue, given that there are no adequate parameters in the state of the art to determine an ideal connecting rod shape for this purpose, and an undesirable R/L factor can result in increased friction. Document US4945866 proposes the eccentricity of the crankshaft rotation in relation to the piston line to reduce vibration and the so-called "pin knock", but applying the teachings of US4945866 necessarily implies a change in the construction of the engine itself, which is generally undesirable.

Additionally, another problem observed in the state of the art is the low efficiency of compression and expulsion of gases in known engines, caused by the deficient construction of connecting rods and piston assemblies. The high rotational speed achieved by current engines implies a very small fraction of time available for compression of the air-fuel mixture in the compression phase. This means that the hasty compression of the air-fuel mixture prevents it from being completed properly, which impairs the efficiency of the combustion and results in a loss of power, requiring a greater amount of fuel to be injected for compensation. This problem is seen both in traditional engines and in engines with different connecting rod configurations, as the state of the art does not suggest any solution to this problem.

These aforementioned problems reduce the efficiency of state-of-the-art internal combustion engines in multiple aspects, including torque and power, fuel consumption, friction inside the cylinder during operation, and the emission of polluting gases.

**Objectives of the Invention**

A first objective of the present invention is to provide a connecting rod and piston assembly for a combustion engine that allows the utilization of at least six positive energies throughout the crankshaft rotation.

A second objective of the present invention is to provide a connecting rod and piston assembly for combustion engines that can be applied to currently existing combustion engines without the need to change the characteristics of the engine itself.

A third objective of the present invention is to provide a connecting rod and piston assembly for a combustion engine that allows a favorable direction of the forces resulting from the explosion in the cylinder to avoid crushing the lower bearing of the connecting rod.

A fourth objective of the present invention is to provide a connecting rod and piston assembly for a combustion engine that allows for greater utilization of torque during the descent of the crankpin and a reduction in the effort required for the ascent of the crankpin.

A fifth objective of the present invention is to provide a connecting rod and piston assembly for a combustion engine that allows for an adequate weight distribution of the connecting rod at all stages of the crankshaft rotation, favoring torque during the descent and compression during the ascent of the piston.

A sixth objective of the present invention is to provide a connecting rod and piston assembly for a combustion engine whose force distributions at each stage of the crankshaft rotation are favorable to torque during the descent and reduce compressive forces during the piston ascent.

A seventh objective of the present invention is to provide a connecting rod and piston assembly for a combustion engine that is capable of mitigating the vibration occurring inside the cylinder, thereby increasing the overall lifespan of the assembly.

An eighth objective of the present invention is to provide a connecting rod and piston assembly for a combustion engine whose connecting rod is subjected to lower stresses compared to traditional connecting rods.

A ninth objective of the present invention is to provide a combustion engine equipped with the aforementioned connecting rod and/or piston assembly in any of its possible embodiments, individually or in combination.

**Brief Description of the Invention**

This invention deals with a combustion engine connecting rod with an upper orifice configured to be associated with a piston and a lower orifice configured to be associated concentrically with a crankshaft pin, the connecting rod being configured according to a first ratio R1 and a second ratio R2, established by the following formulas:

$$R1 = La/Lb;$$

$$R2 = La/Lc;$$

wherein: "La" is a distance taken between the center of the upper hole and the center of the lower hole; "Lb" is a distance taken between an upper horizontal axis passing through the center of the upper hole and the horizontal axis of the center of gravity; and "Lc" is a distance between a vertical axis that passes through the center of the upper and lower holes and a vertical axis that passes through the center of gravity of the connecting rod; where the first ratio R1 has a value between 1.2 and 1.5, preferably between 1.4 and 1.5; and the ratio R2 has a value between 14 and 70, preferably between 17 and 56.

In a possible embodiment, the connecting rod comprises a rod with a lateral face that is aligned with the center of its lower hole.

In another possible embodiment, the center of the connecting rod is arranged at a distance from the center of the lower hole.

In another possible embodiment, the distance is between 0.1 and 20mm, or optionally between 1 and 15mm, or even optionally between 2 and 8mm.

In another possible embodiment, the distance is between 0.1 and 100mm or optionally between 1 and 80mm, or optionally between 10 and 60mm.

In another possible embodiment, the distance is between 0.1 and 600mm, or optionally between 10 and 500mm, or even optionally between 100 and 400mm.

In another possible embodiment, the connecting rod comprises a measured angle between a line that passes through the center of the upper hole and the center of the lower hole, and an axis aligned with the lateral face of the connecting rod shaft.

In another possible embodiment, the angle is between 0.1 to 10°, optionally between 2 and 8°, or optionally between 3 and 7°.

In another possible embodiment, the ratio of a crankshaft stroke radius to the length of the connecting rod is between 0.29 and 0.31.

In another possible embodiment, the lower hole is configured by the association of a lower portion of the connecting rod with a cover, with an interface between the lower portion and the cover forming an angle in relation to a horizontal axis.

In another possible embodiment, the angle is between 0.1 and 45°, optionally between 5 and 45°, or optionally between 10 and 42°.

In another possible embodiment, the connecting rod comprises, in its lower portion, a chamfer arranged adjacent to the rod, with a curvature positioned between the chamfer and the rod, the chamfer and the curvature forming an oil drag region.

In another possible embodiment, the connecting rod is arranged vertically aligned with a central axis of the piston when the position of the crankpin is immediately before its top dead center, so that the force acting on the rod is discharged onto the trunnion line, which, together with the lateral face aligned with the lower axis of the crankshaft, ensures that part of the force is discharged into the center of the crankpin, preventing the crankshaft from rotating in the opposite direction of the ideal rotation.

In another possible embodiment, the lateral face of the rod remains aligned with the axis of the crankpin, while the center of gravity of the rod is already advanced in relation to the center of the trunnion, favoring the rotation of the crankshaft and reducing the loss of energy derived from the lower compression forces acting on the crankpin.

In another possible embodiment, the side face with the lower hole of the connecting rod allows the rod to be angled in relation to the top dead center of the crankpin at an angle, enabling the explosion force to be transferred by the rod at an angle and to be decomposed into a vertical component that is linearly absorbed at the center of the crankpin and trunnion, and into a horizontal component that generates a positive moment favoring the rotation of the crankshaft.

In another possible embodiment, the greater distance between the centerline of the rod and the center of the trunnion favors the torque obtained when descending the piston.

In another possible embodiment, the arrangement of the lateral face aligned with the center of the lower hole allows the weight of the lower portion of the connecting rod to be mostly positioned on one side, which favors the rotation of the crankshaft when the crankpin is at 175 to 195°, thus enabling the weight of the connecting rod's lower bearing itself to favor the return rotation of the crankpin.

In another possible embodiment, the lowering of the crankpin, during the ascent of the crankshaft, allows the connecting rod to remain closer to the journal so that the torque arm is smaller for the return of the crankpin, reducing the force required for compression in the cylinder and relieving the rotational weight of the crankshaft.

In another possible scenario, the displacement of the piston as it approaches its maximum compression point, towards the top dead center of the crankpin, experiences a slight shift in height, representing a fraction-of-a-second pause, due to the angulation generated by the alignment of the rod's lateral face with the lower hole. This allows for an extended compression time, consequently extracting the maximum energy per fuel molecule, thereby reducing the amount of fuel needed to achieve the same power.

In another possible embodiment, the decentralization of the connecting rod, with its side aligned with the lower hole, and the reduction of the rod's angle of action during the compression or exhaust stroke, allows for a reduction in friction between the piston and the cylinder during the compression stage, due to the decrease in lateral forces acting on the cylinder as the rod ascends.

The present invention also relates to a piston assembly comprising a piston, a cylinder that houses the piston, a crankshaft equipped with a trunnion and a crankpin, and a connecting rod, the connecting rod being as mentioned above in any of its possible embodiments.

The present invention also relates to a combustion engine that comprises a piston assembly such as the aforementioned in any of its possible embodiments.

**Brief Description of the Drawings**

The present invention will be described in more detail below based on an exemplary embodiment represented in the drawings. The drawings show:

Figure 1 - is a frontal view of the connecting rod of the present invention in a first embodiment;
Figure 2 - is a frontal view of the connecting rod of the present invention in a first embodiment associated with a crankshaft and a piston;
Figure 3 - is a perspective view of the connecting rod of the present invention in a first embodiment associated with a crankshaft and a piston;
Figure 4A - is a graph of the path taken by the center of gravity of the connecting rod of the present invention in its first embodiment, describing a horizontal displacement ("x" in mm) by vertical displacement ("y" in mm);
Figure 4B - is a detail of the graph in Figure 4A.
Figure 5A - is a graph of crankshaft rotation (in degrees) per torque (in N.m) calculated at the crankshaft joint, for a rotation of 3000 RPM, when the connecting rod of the present invention is applied in its first embodiment;
Figure 5B - is a detail of the graph in Figure 5A.
Figure 6A - is a graph of crankshaft rotation (in degrees) by torque (in N.m) calculated at the crankshaft joint, for a rotation of 6000 RPM, when the connecting rod of the present invention is applied in its first embodiment;
Figure 6B - is a detail of the graph in Figure 6A.
Figure 7A - is a graph of connecting rod angle (in degrees) by torque (in N.m) calculated at the crankshaft joint, for a rotation of 6000 RPM, when the connecting rod of the present invention is applied in its first embodiment;
Figure 7B - is a detail of the graph in Figure 7A.
Figure 8 - is a first front view of the connecting rod of the present invention in a second embodiment;

Figure 9 - is a second front view of the connecting rod of the present invention in a second configuration;

Figure 10 - is a third frontal view of the connecting rod of the present invention in a second embodiment;

Figure 11 - is a frontal view of the piston assembly of the present invention in a second embodiment and in a position near the top dead center of the crankshaft crankpin, illustrating the beginning of the explosion in the chamber;

Figure 12 - is a frontal view of the piston assembly of the present invention in a second embodiment and in a top dead center position of the crankshaft crankpin, illustrating the continuation of the explosion in the chamber, and schematically illustrating the distribution of forces in the connecting rod body;

Figure 13 - is a front view of the piston assembly of the present invention in a second configuration and at a position of approximately a quarter turn of the crankshaft rotation;

Figure 14 - is a front view of the piston assembly of the present invention in a second embodiment and at a position of approximately 195° of the crankshaft rotation;

Figure 15 - is a frontal view of the piston assembly of the present invention in a second embodiment and at a position of approximately three-quarters of a turn of the crankshaft rotation;

Figure 16 - is a schematic representation of the connecting rod of the present invention in a second embodiment and at four possible points of the crankshaft rotation, indicating the general points of positive energy gain; and

Figure 17 - is a graph of lateral force by crankshaft angle from tests conducted with original engines and those modified with the connecting rod in a second embodiment and the piston assembly of the present invention.

**Detailed Description of the Figures**

First, it should be noted that the term "preferential" used herein is intended to characterize embodiments of particular efficiency of the invention among the multiple possible ones, and should not be considered synonymous with "imperative" or "mandatory". In addition, representations of dimensions or angles in the figures presented may be demonstrated out of scale for a better understanding of the operation of the invention.

In addition, all positioning and direction references indicated here must take into account the object itself and the view being observed. For example, figures 1 to 10 disclose the connecting rod and/or the connecting rod assembly of the present invention in preferred embodiments in a frontal view, such that the terms "right," "left," "upper," and "lower," "horizontal," and "vertical," among others, should be understood in relation to the connecting rod itself as observed in the indicated view.

Figure 1 discloses a first embodiment of the connecting rod 10 proposed here, equipped with an upper orifice 10A configured to be associated with a piston 20 and a lower orifice 10B configured to be concentrically associated with a crankpin 31 of a crankshaft 30, as also better seen in figures 2 and 3. A length La of the connecting rod 10 is taken from the center of the upper hole 10A to the center of the lower hole 10B.

For an improved understanding of the invention, an imaginary vertical axis V is represented in figure 1, which passes through the center of both the upper 10A and lower 10B holes. An upper horizontal imaginary axis Ha that passes through the center of the upper hole 10A and a lower horizontal imaginary axis Hb that passes through the center of the lower hole 10b are also represented. A length La is established by taking the distance between the horizontal axes Ha and Hb, i.e., La represents the vertical distance between the upper 10A and lower 10B holes of the connecting rod 10.

Figure 1 represents the center of gravity (CG) of the connecting rod 10. For an improved understanding of the invention, imaginary vertical axis Vcg and horizontal axis Hcg are drawn passing through the center of gravity CG of the connecting rod 10. A distance Lb is represented as the distance between the upper horizontal axis Ha and the horizontal axis of the center of gravity Hcg, and a distance Lc is represented as the distance between the vertical axis V and the vertical axis of the center of gravity Vcg.

For an improved understanding of the invention, taking as reference the center of the upper hole 10A and the rod of the connecting rod 10 aligned with the vertical axis V, Table 1 is presented below, indicating the positioning of the center of gravity CG of a first and a second exemplary shapes of the connecting rod 10 of the present invention in its first embodiment (Example 1 and Example 2). The coordinate system indicated in Table 1 below should be understood as the "X" axis being the horizontal axis and the "Y" axis being the vertical axis, with the center of the upper hole being the origin (0.0) of the system. For comparison purposes, data related to a conventional state-of-the-art connecting rod are also presented:

Table 1

|  | Coordinates [mm] | |
|---|---|---|
|  | X | Y |
| State-of-the-art conventional connecting rod | -0.02 | -95.14 |
| Example 1 | -2.38 | -91.04 |

(continued)

|  | Coordinates [mm] | |
|---|---|---|
|  | X | Y |
| Example 2 | -4.76 | -91.06 |

The connecting rods 10 indicated above as Example 1 and Example 2 in Table 1 above are possibilities for the embodiment of the present invention among multiple possibilities, and the invention is not limited to these specific parameters listed above, as will be better clarified below.

It is observed that connecting rod 10 of the present invention, in its multiple possible embodiments, has its center of gravity shifted compared to conventional connecting rods of the prior art. It was observed throughout the tests conducted for the present invention that the position of the center of gravity of the connecting rod has a significant influence on the average torque developed by the engine. It was determined that this positive and unexpected technical effect derives from the change in the instant of occurrence of the peak torque of the inertial forces, which is a function of the positioning of the center of gravity of the connecting rod. This effect of changing the peak torque instant, combined with the effect of the pressure developed in the combustion chamber during the explosion-expansion cycle, contributes to the increase in the average torque developed by the internal combustion engine.

It was also observed that the effect of changing the peak torque instant can be manipulated both for a delay and for an advance of the aforementioned peak torque instant. In the example of Figure 1 and in Examples 1 and 2 of Table 1, for instance, the arrangement of the center of gravity CG of connecting rod 10 of the present invention promotes a delay in the development of the peak torque. On the other hand, and taking Examples 1 and 2 as a basis, if the center of gravity CG of connecting rod 10 is shifted in the opposite direction (i.e., towards the other side of the horizontal axis "X", in this case, with positive values for the coordinate "X"), the peak torque can be advanced.

This allows for yet another advantageous and unexpected effect of the present invention, which is its flexibility of application in different types of engines. It will be understood that the preference for delaying or advancing peak torque will depend on the type of engine used. In this case, the state of the art does not foresee solutions for the enhancement of engines that would prefer, for example, an advancement of peak torque, unlike the present invention.

In addition, it was observed that the connecting rod 10 of the present invention can be configured to achieve a center of gravity optimally positioned to obtain the average torque gain through a ratio of dimensions. Such ratios involve: (i) a first ratio "R1" between the distance La measured between the center of the upper hole 10A and the center of the lower hole 10B and the distance Lb measured between the center of the upper hole 10A and the center of gravity CG; and (ii) a second ratio "R2" between the distance La measured between the center of the upper hole 10A and the center of the lower hole 10B and the distance Lc measured between the imaginary vertical axis V and the vertical axis Vcg that passes through the center of gravity CG. The ratios "R1" and "R2" are reproduced in the formulas below:

$$R1 = \frac{La}{Lb} \; ; R2 = \frac{La}{Lc}$$

In order to obtain the Lb and Lc values of a connecting rod with suitable construction for the intended purpose in different types of engines, tests were conducted to determine the optimally applicable "R1" and "R2" ratios. Tests for comparative purposes were performed using the connecting rods from Examples 1 and 2 of Table 1 above and the conventional connecting rod of the state of the art also described in Table 1. The state-of-the-art connecting rod used for the tests was a connecting rod that was part of a "Nissan Kicks 1.6 HR16" model car, year 2017/2019. The tests were conducted (i) with the state-of-the-art connecting rod; (ii) with connecting rod 10 from Example 1; (iii) with connecting rod 10 from Example 2; and (iv) with connecting rod 10 from Example 1 horizontally inverted (with "Y" values in Table 1 inverted) to verify the potential for advancing the peak torque. The tests were carried out using simulations in the software "SIEMENS Simcenter 3D Motion" at rotations of 3000 and 6000 RPM.

Figures 4A and 4B disclose a graph of the displacement of the center of gravity of the tested connecting rods on the X and Y axes. The figures indicate the results for the state-of-the-art connecting rod "ET", for connecting rod 10 of Example 1 "Ex1", for connecting rod 10 of Example 2 "Ex2", and for connecting rod 10 of Example 1 inverted "Ex1v". It will be understood that the graphs in figures 4A and 4B remain unchanged for both rotations tested.

Figures 5A, 5B, and 6A and 6B disclose graphs of crankshaft rotation (in degrees) by torque acting on the crankshaft (in N.m), for rotations of 3000 and 6000 RPM. Tables 2, 3, 4, and 5 below indicate the local maximum and minimum values for different turning intervals and for each connecting rod tested:

Table 2

| RPM | | Degrees of Rotation | | | |
|---|---|---|---|---|---|
| | State-of-the-art (ET) connecting rod | | | | |
| | | 0°- 90° | 90°- 180° | 180°- 270° | 270°- 360° |
| 3000 | Peak Angle [°] | 35.47 | 111.57 | 248.43 | 324.53 |
| | Peak Value [Nm] | -50.15 | 36.89 | -36.90 | 50.16 |
| | Average value [Nm] | -23,42 | 23.79 | -23.79 | 23.42 |
| 6000 | Peak Angle [°] | 35.52 | 111.63 | 248.39 | 324.50 |
| | Peak Value [Nm] | -201.22 | 146.82 | -146.83 | 201.23 |
| | Average value [Nm] | -94.28 | 94.65 | -94.68 | 94.30 |

Table 3

| RPM | | Degrees of Rotation | | | |
|---|---|---|---|---|---|
| | Connecting Rod of Example 1 | | | | |
| | | 0°- 90° | 90°- 180° | 180°- 270° | 270°- 360° |
| 3000 | Peak Angle [°] | 35.97 | 112.35 | 248.91 | 324.95 |
| | Peak Value [Nm] | -51.57 | 37.65 | -38.70 | 52.21 |
| | Average value [Nm] | -24.28 | 24.65 | -24.65 | 24,28 |
| 6000 | Peak Angle [°] | 35.99 | 112.38 | 248.86 | 324.93 |
| | Peak Value [Nm] | -206.87 | 149.87 | -154.04 | 209.46 |
| | Average value [Nm] | -97.70 | 98.07 | -98.09 | 97.72 |

Table 4

| RPM | | Degrees of Rotation | | | |
|---|---|---|---|---|---|
| | Example 1 connecting rod inverted | | | | |
| | | 0°- 90° | 90°- 180° | 180°- 270° | 270°- 360° |
| 3000 | Peak Angle [°] | 35.06 | 111.07 | 247.64 | 324.03 |
| | Peak Value [Nm] | -52.22 | 38.70 | -37.65 | 51.57 |
| | Average value [Nm] | -24.27 | 24.64 | -24.64 | 24,28 |
| 6000 | Peak Angle [°] | 35.09 | 111.12 | 247.60 | 323.99 |
| | Peak Value [Nm] | -209.46 | 154.04 | -149.87 | 206.87 |
| | Average value [Nm] | -97.70 | 98.07 | -98.10 | 97.73 |

Table 5

| RPM | | Degrees of Rotation | | | |
|---|---|---|---|---|---|
| | Example 2 connecting rod | | | | |
| | | 0°- 90° | 90°- 180° | 180°- 270° | 270°- 360° |
| 3000 | Peak Angle [°] | 36.10 | 112.58 | 249.00 | 325.05 |
| | Peak Value [Nm] | -51.48 | 37.52 | -38.84 | 52.30 |
| | Average value [Nm] | -24.29 | 24.66 | -24.66 | 24.27 |

(continued)

| Example 2 connecting rod | | | | | |
|---|---|---|---|---|---|
| RPM | | Degrees of Rotation | | | |
| | | 0°- 90° | 90°- 180° | 180°- 270° | 270°- 360° |
| 6000 | Peak Angle [°] | 36.14 | 112.60 | 249,00 | 325.04 |
| | Peak Value [Nm] | -206.51 | 149.34 | -154.61 | 209.79 |
| | Average value [Nm] | -97.75 | 98.12 | -98.14 | 97.77 |

In addition to the information in Tables 2 to 5 above, Figures 7A and 7B are also provided, illustrating graphs of connecting rod angle (in degrees) by torque acting on the crankshaft (in N.m) for each connecting rod tested.

The results listed here disclose that the use of the connecting rod of the present invention changes the angle of peak torque in the engine, delaying or advancing this peak torque in relation to what is seen in the application of the connecting rod of the state of the art. This results in an average torque gain acting on the crankshaft by the use of the connecting rod of the present invention compared to the conventional connecting rod of the prior art.

From these and other tests carried out, it was identified that the optimally applicable ratios for obtaining the benefits proposed by the connecting rod of the present invention are the following: R1 ratio with a value between 1.2 and 1.5, preferably between 1.4 and 1.5; and R2 ratio with a value between 14 and 70, preferably between 17 and 56. It is further clarified that the ratios may vary depending on, for example, the weight concentration of the connecting rod in the lower bearing or on one side of the connecting rod. In any case, it will be understood that the preferential ratios represent a particular efficiency range of the invention, but are not restrictive to its application.

It will be understood that these ratios "R1" and "R2" can be applied both in obtaining a connecting rod 10 with a peak torque delay effect and with a peak torque advance effect, with the result of the calculation being considered as a modulus or absolute value.

Using the optimized ratio values indicated above, it will be understood that the positioning of the center of gravity in a connecting rod 10 as proposed by the present invention can be determined. The configuration of a CG center of gravity such as the one proposed here can be carried out in different ways. For example, a positioning of the center of gravity CG can be obtained by angling the connecting rod 10, such as the connecting rod 10 illustrated in figures 1 to 3. Alternatively or complementarily, the connecting rod 10 can also be configured with a mass distribution aimed at a specific positioning of its center of gravity. This specific mass distribution can be obtained in different ways, for example, through the addition of elements that increase the mass of the connecting rod 10 in a specific region, or the use of different materials of different densities to configure different parts of the connecting rod 10 aiming at moving the center of gravity CG. It will be understood that knowing the value of the ratios R1 and R2 as described above, it will be possible to obtain a connecting rod 10 with a center of gravity CG that achieves the objectives proposed here.

The present invention also contemplates a second connecting rod 10 embodiment for application in a combustion engine, featuring an upper orifice 10A configured to be associated with a piston 20 and a lower orifice 10B configured to be concentrically associated with a crankpin 31 of a crankshaft 30, as best seen in figures 8, 9, and 10. The referred upper 10A and lower 10B orifices are commonly called the connecting rod "bearings," and piston 20 is commonly called the piston "head." The top hole 10A is associated with the piston 20, preferably via a pin.

Said connecting rod 10 in its second embodiment comprises a rod 11 equipped with a lateral face 11' that is aligned with the center of its lower hole 10B, as best seen in figure 8. The term "center-aligned" should be understood as, considering an imaginary axis E aligned with the lateral face 11' of the rod 11 of the connecting rod 10 in a frontal view such as that in figure 8, said imaginary axis E passes through the center of the lower hole 10B. This feature of the 10 connecting rod allows, advantageously and unexpectedly, multiple benefits to the operation of the combustion engine related to force distribution, weight distribution during crankshaft rotation, and reduction of vibration of the piston assembly, among others, as will be seen later. The connecting rod also comprises a second lateral face 11" opposite the first lateral face 11". In the context of figures 8 to 916, which illustrate frontal views, the first lateral face 11' is a right lateral face of the connecting rod, and the second lateral face 11" is a left lateral face of the connecting rod.

Preferably, the center of the rod 11 of the connecting rod 10 in its second embodiment is positioned at a distance D from its lower hole 10B or from the center of the crankshaft crankpin 31. Said distance D is measured between the axis E and the central axis of rod 11, represented in figure 8 by the imaginary axis F. It will be understood that the value of distance D varies according to the design of the engine to which the connecting rod 10 and its piston assembly will be applied, and may assume different values depending on the type of engine. For example, for small commercial motor vehicle engines, the D-distance can vary between 0.1 and 20mm, or optionally between 1 and 15mm, or even optionally between 2 and 8mm. For medium-sized motors, such as those used in heavy-duty equipment, the D-distance can vary between 0.1 and 100mm or optionally between 1 and 80mm, or optionally between 10 and 60mm. For large engines, such as engines of large vehicles like ships, the D-distance can vary between 0.1 and 600mm, or optionally between 10 and 500mm, or optionally between 100 and 400mm.

In addition, the aforementioned connecting rod 10 in its second embodiment comprises an angle C measured between a line that passes through the center of the upper hole 10A and the center of the lower hole 10B (represented in figure 10 by the imaginary line G) and a vertical axis such as axes E or F. It will be understood that the value of angle C varies according to the design of the engine to which the connecting rod 10 and its piston assembly will be applied, and it may assume different values depending on the type of engine, ranging from 0.1 to 10°, optionally between 2 to 8°, or optionally between 3 to 7°.

In a preferred but not obligatory manner, the lower hole 10B is configured by the association of a lower portion 12 of the connecting rod 10 with a cap 13, and an interface 14 between the lower portion 12 and the cap 13 forms an acute angle A in relation to a horizontal axis measured from the center of the connecting rod 10, represented in figure 8 by the imaginary horizontal axis I. This interface 14 is formed by the junction of the faces of the ends of the lower portion 12 and the cap 13, and the purpose of angle A is to allow an adequate distribution of the forces acting on the connecting rod 10. It will be understood that the value of angle A varies according to the design of the engine to which the connecting rod 10 and its piston assembly will be applied, and may assume different values depending on the type of engine. In a possible embodiment, the angle A can vary between 0.1 and 45°, optionally between 5 and 45°, or optionally between 10 and 42°.

As already clarified, the R/L ratio between the stroke or radius of the crankshaft R (as exemplified in figure 12) and the length of the connecting rod L, taken as the distance between its upper and lower holes (as exemplified in figure 8), is an important relationship for the correct functioning of any combustion engine. Thus, desirably, the ratio between a crankshaft stroke radius R and the length L of rod 11 of connecting rod 10 in its second embodiment is between 0.24 and 0.35, optionally between 0.29 and 0.31. The radius R should be understood as the measurement between the center of the trunnion 30 and the center of the crankpin 31, and the length L of the rod 11 should be understood as the measurement between the centers of its upper 10A and lower 10B holes, drawn parallel to the body of the rod 11.

It should be noted that the characteristic of alignment of the lateral face 11' with the center of the lower hole 10B of the connecting rod 10 through distance D is directly related to the R/L ratio referenced here. It will be understood that through the alignment of the lateral face 11' with the center of the lower orifice 10B of the connecting rod 10 via the distance D, the connecting rod 10 of the present invention can be used to replace conventional engine connecting rods with the aim of adjusting the R/L factor of the piston assembly, in order to advantageously increase the efficiency of the engine without altering its other characteristics.

It is also important to note that the alignment of the side face 11' with the center of the lower orifice 10B of the connecting rod 10 ensures not only this adjustment of the R/L factor, but also guarantees the achievement of a compact connecting rod that can be replaced in conventional engines without the risk of collision with the walls of the piston cylinder, in contrast to what is observed in the state of the art.

In a preferred embodiment, the connecting rod 10 comprises in its lower portion 12 a chamfer H1 arranged adjacent to the rod 11, with a curvature H2 positioned between the chamfer H1 and the rod 11. The chamfer H1 and the curvature H2 configure a region that favors oil drag during the crankshaft turn.

By using the connecting rod 10 in its second embodiment and the piston assembly of the present invention, it is possible to obtain or harness at least six positive mechanical energies during a rotation of the crankshaft, energies that are not obtained by the piston assemblies of the prior art. Such energies obtained are described in more detail below.

Figures 11 to 15 illustrate the operation of connecting rod 10 of the present invention in its second embodiment applied to a piston assembly as proposed, in a preferred configuration. The turning radius of the pin 31 is generally represented by the dashed line R1. It will be understood that an engine whose application requires a different piston assembly arrangement from that shown in the figures (for example, with the piston cylinder at an angle) does not alter the application method of the connecting rod or the piston assembly of the present invention. It is sufficient to consider the effective centerline or working direction of the piston for configuring the connecting rod and piston assembly proposed herein. This arrangement of the connecting rod 10 and the piston assembly allows, advantageously and unexpectedly, benefits to the engine regarding the explosion timing, the positioning of the connecting rod 10 at the moment of explosion, the distribution of force, and the friction of the assembly, as will be seen in more detail below.

In Figure 11, a position of the pin 31 is illustrated slightly before its top dead center PMSm, where the rod 11 is vertically aligned, i.e., it is parallel to the centerline F of piston 20. It should be noted that in the position illustrated in figure 4, the piston 20 is positioned substantially close to the minimum volume point of cylinder 100, that is, at the end of the compression. However, the arrangement of the connecting rod 10 with its side face 11' aligned to the center of the lower hole 10B allows the rod 11 to reach its verticality before the top dead center of the PMSm crankpin. For a better understanding of the invention, the term "upper dead center" should be understood as the maximum upper position of the corresponding element when considering the crankshaft rotation.

In this sense, when the piston 20 approaches its maximum compression point as seen in figure 11, the ignition of the compressed air-fuel mixture inside the chamber begins, which results in an initial explosion force FE1 that is discharged onto the crank pin rod 11. In engines with state-of-the-art connecting rods, the connecting rod shaft is angled to the right of the piston F-axis when the crankpin is in a position such as that shown in Figure 11. This means that when the FE1 force acts on the state-of-the-art connecting rods, said FE1 force pushes the connecting rod backwards, tending to rotate the crankshaft in the opposite direction. In contrast, the connecting rod 10 of the present invention is arranged vertically aligned with the F-axis of the piston 20 when the position of the crankpin 31 is immediately before its top dead center TDC, such that the force acting on the rod 11 is discharged along the line of the trunnion 30. In addition, the 11' lateral face arrangement aligned with the lower axis 10B of the crankshaft ensures that part of the FE1 force is discharged at the center of the crankpin 31, thus mitigating any possible force that might tend to rotate the crankshaft in the opposite direction of the ideal rotation. With this, the connecting rod 10 of the present invention guarantees the achievement of a first positive force 1.

Figure 12 discloses the piston assembly of the present invention, in its preferred embodiment, illustratively representing the crankpin 31 at its top dead center (TDC) moments after the start of the explosion in cylinder 100 of the engine. The second positive energy obtained by the use of this invention is observed at the beginning of the explosion, where the lateral face 11' of the rod 11 remains aligned with the axis of the pin 31, but the center of gravity of the rod 11 is already advanced in relation to the center of the trunnion, favoring the rotation of the crankshaft and reducing the loss of energy derived from the lower compression forces acting on the pin 31.

It can be observed in figure 12 that due to the alignment of the lateral face 11' with the lower hole 10B of the connecting rod 10, the rod 11 is angled at the upper dead center of the PMSm crankpin at an angle C. It will be understood that the angle C in figure 12 corresponds to the angle C illustrated in figure 10. The explosion force FE is transferred by the rod 11 at an angle, depending on the angle C of the rod 11, and is decomposed into a vertical component Fev that is absorbed linearly at the center of the pin 31 and the trunnion 30, and into a horizontal component Feh that generates a positive moment that favors the rotation of the crankshaft, configuring a second positive energy obtained by the use of the present invention.

It should be noted that traditional state-of-the-art engines are not capable of allowing the emergence of positive momentum from the beginning of the explosion, since their connecting rods are vertically aligned with the piston at the time of the explosion in the chamber. This means that the normal force acting directly on the crankshaft is completely lost and is also substantially increased on the trunnion and crankpin. In contrast, the connecting rod in its second embodiment and the piston assembly of the present invention allow the rod 11 to be arranged at an angle during the explosion, with its lateral face 11' aligned with the lower hole 10B. This not only generates a positive moment that favors the rotation of the crankpin 31 but also reduces the forces acting on the center of the trunnion 30 and the crankpin 31. In addition, this arrangement ensures that no opposing forces to the crankshaft rotation will arise, since the angle generated in this position by the alignment between the lateral face 11' and said crankpin 31 makes this practically impossible.

Additionally, due to the angulation of interface 14 of the lower portion of connecting rod 10 in its second embodiment, the force components that reach the lower portion of connecting rod 10 are properly absorbed in a normal direction of interface 14 and prevent damage to connecting rod 10.

Figure 13 illustrates a condition of approximately one-quarter of the total crankshaft turn. It is observed that the configuration of the connecting rod 10 and the piston assembly proposed here allows the force lever applied at this moment of rotation to be greater than that observed in traditional state-of-the-art engines, due to the greater distance between the centerline of rod 11 and the center of the trunnion 30, which favors the torque obtained during the descent of the piston and constitutes a third positive energy obtained by the connecting rod 10 and piston assembly proposed here. It will be understood that an angle A1 measured between the centerline of the piston 20 and the centerline of the rod 11 in a condition of a quarter turn of the crankshaft using the connecting rod 10 and the piston assembly of the present invention will be greater than a similar angle measured in a traditional state-of-the-art engine in the same turn condition, thus proving the presence of a larger torque arm provided by the invention and, consequently, the obtaining of a third positive energy provided by the invention.

Figure 14 illustrates a condition of approximately 195° of rotation of the crankpin 31. This condition represents a moment after the crankshaft turns to return the piston 20 for compression or exhaust, depending on the stage of the combustion cycle. In any case, it is observed that due to the extra moment generated by the third energy, the movement of the rod 11 generates torque from 175° to approximately 195° of its rotation, in contrast to the traditional 180°, thus generating approximately 20° more torque than traditional connecting rods and piston assemblies. In addition, the arrangement of the lateral face 11' aligned with the center of the lower hole 10B allows the weight of the lower portion of the connecting rod 10 (lower bearing) to be mostly positioned on a side that favors the rotation of the crankshaft when the crankpin is at 180° (in the case of figure 14, on the right side of the centerline F of the piston 20), thus allowing the weight of the lower bearing 17 of the connecting rod 10 to favor the return rotation of the crankpin 31. These aspects thus configure a fourth positive energy provided by the present invention.

Figure 15 represents a condition of approximately three-quarters of a turn of the crankshaft. It is noted that, contrary to what occurs during the descent of the crankpin 31, during the ascent of the crankshaft, the rod 11 of the connecting rod 10 remains closer to the trunnion 30, so that the torque arm is smaller for the return of the crankpin 31. This reduces the force required for compression in cylinder 100 and relieves the crankshaft's turning weight, thus setting up a positive fifth energy. It shall be understood that an angle A2 measured between the centerline of the piston 20 and the centerline of the rod 11 in a condition of three-quarters of a turn of the crankshaft using the connecting rod 10 and the piston assembly of the present invention will be smaller than a similar angle measured in a traditional state-of-the-art engine in the same turn condition, thus proving the presence of a smaller torque arm provided by the invention in the return of the crankshaft and, consequently, the attainment of the aforementioned fifth positive energy.

It is also important to note that the decentralization of rod 11 of connecting rod 11, with its side 11' aligned with the lower orifice 10B, and the reduction of the actuation angle A2 of rod 11 during the compression or exhaust stroke, allow for a significant reduction in friction between piston 20 and cylinder 100 during the compression stage. This is due to the decrease in lateral forces acting on cylinder 100 as rod 11 ascends, which proves to be an advantageous and unexpected effect of connecting rod 10 and the piston assembly proposed here.

Returning to figures 11 and 12, figure 11 represents a position of the pin 31 posterior to that of figure 15, when the piston 20 approaches its maximum compression point. When transitioning to the upper dead center of the pin 31 as seen in figure 12, the mentioned piston 20 undergoes a very small displacement in height, practically imperceptible, which in practical terms represents a brief stop for a substantially short time (for example, a fraction of a second), due to the angulation generated by the alignment of the lateral face 11' of the rod 11 with the lower hole 10B. This allows for extending the compression time, extracting the maximum energy per fuel molecule, thus reducing the amount of fuel needed to achieve the same power and establishing a sixth positive energy of the invention.

Thus, it makes it clear that the connecting rod in its second embodiment and the piston set proposed here are capable of configuring six positive energies that are realized during the rotation of the crankshaft.

Figure 16 presents an illustrative representation of four positions of the connecting rod 10 during the rotation of the crankshaft and indicating, in a general way, the pivot points at which each of the six energies is felt, which are:

(1) A first positive mechanical energy obtained near the top dead center of the crankpin 31, due to the vertical arrangement of the connecting rod 10 in relation to the piston 20, configured by the alignment of the lateral face 11' with the lower hole 10B, and allowing the initial forces of the FE1 explosion to be directed to the center of the crankpin 31 and the trunnion 30, avoiding the effect of "pin knocking" and the opposite rotation tendency of the crankshaft;

(2) A second positive mechanical energy at the upper point of the crankpin 31, at an instant after the explosion in the chamber, due to the angulation of the rod 11 of the connecting rod 10 that favors the decomposition of the explosion force in favor of the crankshaft rotation;

(3) A third mechanical energy obtained by the larger arm or angle of the rod 11 in relation to the line of the piston 20, favoring the torque of the explosion and the rotation of the crankshaft;

(4) A fourth positive mechanical energy obtained at the turn of the crankshaft, with torque being generated up to 195° of rotation and with the weight of bearing 17 greater in the direction of rotation of the crankshaft, favoring said rotation;

(5) A fifth positive mechanical energy obtained during the ascent or return of the crankshaft rotation, where the arm or angle of rod 11 in relation to the piston line is smaller, reducing the force required for compression and alleviating the weight of the shaft rotation;

(6) A sixth positive mechanical energy obtained by the slight stop of the piston near its maximum height, allowing complete compression of the fuel and maximum extraction of energy from the fuel.

It should be noted that point 6 of the sixth energy represented in figure 16 is illustrated close to point 1 of the first energy, but the action of the sixth energy begins coincidentally with the first energy of point 1 and extends to point 2 of the second energy, as will be understood from the clarifications regarding the sixth energy presented earlier.

In addition, the connecting rod in its second embodiment and the piston set proposed here can be used in any internal or external combustion engine, gasoline or ethanol vehicles, hybrid or not, with or without turbo, for diesel engines, including high-pressure diesel engines, for example, for work vehicles such as trucks, or even for passenger vehicles like 4x4s, ship engines, outboard motors, agricultural tractors, heavy machinery, construction machinery, generators, marine inboard engines, jet-skis, compressed air engines, chainsaws, blowers, motorcycles, buses, piston aircraft, racing vehicles, ferries, motor pumps, stationary engines, light, medium, and large equipment with combustion engines, locomotives, ships, and others, built in previous and current decades. It is not necessary to change the configuration and architecture of their operation, increasing engine performance, power, torque, reducing fuel consumption and pollutant emissions into the atmosphere, all without the need to alter any aspect of the engine to which they are being applied. The application of the connecting rod and piston assembly proposed here extends to Otto Cycle engines, powered by diesel, gasoline, alcohol, biofuels, CNG, biodiesel, hydrogen, or any fuel used to generate energy inside the engine cylinder. Other possible applications are engines, bicycles, engines for air conditioning, pumps for irrigation and agriculture.

Through the connecting rod 10 in its second embodiment and the piston set proposed here, it is possible, therefore, to increase the efficiency of the engine due to multiple factors resulting from the six positive energies described above, as well as the particular construction and arrangement of the invention proposed here, such as:

- Increased torque utilized during crankshaft rotation in multiple positions, consequently increasing the overall power of the engine;
- Reduction of friction in the cylinder during compression and exhaust, decreasing piston and cylinder wear, and consequently increasing the lifespan of the assembly;
- Increased engine working efficiency and consequent reduction in pollutant gas emissions;
- Longer permanence time of the piston in its upper dead center, with greater efficiency in compression and fuel burning, which reduces fuel consumption and improves gas burning; and
- Possibility of applying the proposed connecting rod and piston set to any existing traditional engine, allowing for an increase in its efficiency without the need for modifications to the designs or constructions of current engines.

In addition, from the use of the connecting rod in its second embodiment and the piston set proposed here, the maximum possible energy is extracted per molecule (particle) of fuel burned in the combustion process and gas expansion inside the cylinder of the internal combustion engine, generating an average effective pressure from the top dead center (TDC) to the bottom dead center (BDC) of the piston, which is higher when compared to state-of-the-art engines.

Tests were conducted to demonstrate the superiority of the connecting rod in its second embodiment and the piston set proposed here compared to engines equipped with traditional connecting rods and piston sets of the state of the art, and substantially advantageous results were obtained in terms of power, friction, pollutant generation, and friction reduction.

Tests conducted in real-world conditions result in significant consumption efficiency gains. A test in real conditions was carried out on a "FIAT UNO 2019 1.0 LF FLEX" automobile with a modified engine containing the connecting rod and piston assembly of the present invention. The other specifications of the car have not been changed. The car with a modified engine was tested with regular gasoline and hydrous ethanol, and the test consisted of traveling approximately 136 km on public roads. The average fuel consumption using regular gasoline with the modified engine was 21.3 km/L, which represents an increase in fuel efficiency between 59% and 83% compared to the average consumption officially declared by the manufacturer (11.6 km/L in the city and 13.4 km/L on the highway). For ethanol, the average consumption of the modified engine was 15.9 km/L, which represents a decrease in consumption between 69% and 99% when compared to the average consumption officially declared by the manufacturer (8.0 km/L in the city and 9.4 km/L on the highway).

Not only was a significant advantage observed in terms of engine power and consumption, but also, in an advantageous and unexpected way, a significant reduction in friction between the piston and the cylinder was observed. Figure 17 discloses a graph of lateral force F (N) by crankshaft angle AV (degrees - °) in tests conducted with an original engine (MO) and a modified engine (MM) of the car "FIAT 1.0 8v FIRE FLEX" according to the recommendations of the ABNT NBR ISO 1585 standard. It makes it clear that the lateral force observed in the modified engine is substantially less than that observed in the original engine. In terms of numbers, the maximum lateral force observed in the original engine was 1863N, while the maximum lateral force observed in the modified engine was 1337N, representing a maximum lateral force reduction of approximately 28%. This represents a substantial and desirable reduction in the friction suffered between the piston and the cylinder and, consequently, a substantial increase in the service life of the engine.

In addition, the application of the connecting rod and piston set proposed here extends to internal combustion engines and can also extend to hybrid electric engines, air compressors, hydraulic pumps, vacuum pumps, power generator sets, and any machine or equipment operating with a piston in reciprocating motion that needs to transform this movement into rotary motion to generate torque for the production of mechanical work.

It will become clear that the first and second embodiments of the connecting rod 10 of the present invention proposed here can be combined to achieve their respective positive effects together.

Having described a preferred embodiment, it should be understood that the scope of the present invention encompasses other possible variations, being limited only by the content of the accompanying claims, possible equivalents being included therein.

**Claims**

1. A connecting rod (10) for a combustion engine equipped with an upper orifice (10A) configured to be associated with a piston (20) and a lower orifice (10B) configured to be concentrically associated with a crankshaft pin (31), the connecting rod (10) being **characterized by** the fact that it is configured based on a first ratio R1 and a second ratio R2, established by the following formulas:

$$R1 = \frac{La}{Lb} \; ; R2 = \frac{La}{Lc}$$

wherein:

> "La" is a distance taken from the center of the upper hole (10A) to the center of the lower hole (10B);
> "Lb" is a distance taken between an upper horizontal axis Ha(Ha) passing through the center of the upper hole (10A) and the horizontal axis of the center of gravity (Hcg); and
> "Lc" is a distance between a vertical axis (V) passing through the center of the upper and lower holes (10A, 10B) and a vertical axis (Vcg) passing through the center of gravity (CG) of the connecting rod (10);
> where the first ratio (R1) has a value between 1.2 and 1.5, preferably 1.4 to 1.5, and the second ratio (R2) has a value between 14 and 70, preferably between 17 and 56.

2. The connecting rod (10) for a combustion engine according to claim 1, equipped with an upper orifice (10A) configured to be associated with a piston (20) and a lower orifice (10B) configured to be concentrically associated with a crankpin (31) of a crankshaft, the connecting rod (10) being **characterized by** comprising a rod (11) with a lateral face (11') that is aligned with the center of its lower orifice (10B).

3. The connecting rod (10) for a combustion engine according to claim 1, **characterized by** the fact that the center of the rod (11) of the connecting rod (10) is positioned at a distance (D) from the center of the lower orifice (10B).

4. The connecting rod (10) for combustion engines according to claim 3, **characterized by** the fact that the distance (D) is between 0.1 and 20 mm, or optionally between 1 and 15 mm, or optionally between 2 and 8 mm.

5. The connecting rod (10) for a combustion engine according to claim 3, **characterized by** the fact that the distance (D) is between 0.1 to 100mm or optionally between 1 to 80mm, or optionally between 10 and 60mm.

6. The connecting rod (10) for combustion engines according to claim 3, **characterized by** the fact that the distance (D) is between 0.1 and 600mm, or optionally between 10 and 500mm, or optionally between 100 and 400mm.

7. The connecting rod (10) for a combustion engine according to claim 1, **characterized by** the fact that it comprises an angle (C) measured between a line (G), which passes through the center of the upper hole (10A) and the center of the lower hole (10B), and a shaft (E) aligned with the lateral face (11') of the rod (11) of the connecting rod (10).

8. The connecting rod (10) for a combustion engine according to claim 7, **characterized by** the fact that the angle (C) is between 0.1 to 10°, optionally between 2 to 8°, or optionally between 3 to 7°.

9. The connecting rod (10) for a combustion engine according to claim 1, **characterized by** the fact that the ratio between the radius (R) of the crankshaft stroke (30) and the length (L) of the rod (11) of the connecting rod (10) is between 0.24 and 0.35, optionally between 0.29 and 0.31.

10. The connecting rod (10) for a combustion engine according to claim 1, **characterized by** the fact that the lower orifice (10B) is configured by the association of a lower portion (12) of the connecting rod (10) with a cap (13), an interface (14) between the lower portion (12) and the cap (13) forming an angle (A) in relation to a horizontal axis (I).

11. The connecting rod according to claim 10, **characterized in that** the angle (A) is between 0.1 and 45°, optionally between 5 and 45°, or optionally between 10 and 42°.

12. The connecting rod according to claim 1, **characterized by** comprising, in its lower portion (12), a chamfer (H1) arranged adjacent to the rod (11), with a curvature (H2) positioned between the chamfer (H1) and the rod (11), the chamfer (H1) and the curvature (H2) forming an oil drag region.

13. The connecting rod according to claim 1, **characterized by** the fact that the connecting rod (10) is arranged vertically aligned with a central axis (F) of the piston (20) when the position of the crankpin (31) is immediately prior to its top dead center (TDC), so that the force acting on the rod (11) is discharged onto the trunnion line (30), which, together with the side face (11') aligned with the lower shaft (10B) of the crankshaft, ensures that part of the force (FE1) is discharged into the center of the crankpin (31), preventing the crankshaft from rotating in the opposite direction of the ideal rotation.

14. The connecting rod according to claim 1, **characterized by** the fact that the lateral face (11') of the rod (11) remains aligned with the pin axis (31), while the center of gravity of the rod (11) is already advanced in relation to the center of the trunnion, favoring the rotation of the crankshaft and reducing the loss of energy derived from the lower compression forces acting on the pin (31). The connecting rod according to claim 1, **characterized by** the fact that the lateral face (11') with the bottom hole (10B) of the connecting rod (10), allows the rod (11) to be angled with respect to the upper dead center of the pin (PMSm) and an angle (C), allowing the explosion force (FE) to be transferred by the rod (11) at an angle, and to be decomposed into a vertical component (FEv) that is absorbed linearly in the center of the pin (31) and trunnion (30), and into a horizontal component (FEh) that generates a positive momentum favoring the rotation of the crankshaft.

15. The connecting rod according to claim 1, **characterized by** the fact that the greater distance between the centerline of the rod (11) and the center of the trunnion (30) favors the torque obtained in the descent of the piston.

16. The connecting rod according to claim 1, **characterized by** the fact that the arrangement of the lateral face (11') aligned with the center of the lower hole (10B) allows the weight of the lower portion of the connecting rod (10) to be predominantly positioned on one side that favors the rotation of the crankshaft when the crankpin is at 175 to 195°, thus enabling the weight of the lower bearing (17) of the connecting rod (10) itself to favor the return rotation of the crankpin (31).

17. The connecting rod according to claim 1, **characterized by** the fact that the descent of the crankpin (31), during the ascent of the crankshaft, allows the rod (11) of the connecting rod (10) to remain closer to the trunnion (30) so that the torque arm is smaller for the return of the crankpin (31), reducing the force required for compression in the cylinder (100) and relieving the rotational weight of the crankshaft.

18. The connecting rod according to claim 1, **characterized by** the fact that the displacement of the piston (20) when approaching its maximum compression point, to the top dead center of the crankpin (31), undergoes a small displacement in height, representing a stop of a fraction of a second, due to the angulation generated by the alignment of the lateral face (11') of the rod (11) with the lower hole (10B), allowing the compression time to be extended, consequently extracting the maximum energy per fuel molecule, thus reducing the amount of fuel needed to achieve the same power.

19. The connecting rod according to claim 1, **characterized by** the fact that the decentralization of the rod (11) of the connecting rod (10), with its side (11') aligned with the lower hole (10B), and the reduction of the actuation angle (A2) of the rod (11) during the compression or exhaust rise, allows for the reduction of friction between the piston (20) and the cylinder (100) during the compression stage, due to the decrease in the lateral forces acting on the cylinder (100) as the rod (11) rises.

20. A piston set **characterized by** comprising a piston (20), a cylinder (100) housing the piston (20), a crankshaft equipped with trunnion (30) and crankpin (31), and a connecting rod (10), the connecting rod (10) being as defined in any of claims 1 to 19.

21. A combustion engine **characterized by** comprising a piston assembly as defined in claim 20.

## INTERNATIONAL SEARCH REPORT

| International application No. |
|---|
| **PCT/BR2023/050306** |

**A.     CLASSIFICATION OF SUBJECT MATTER**

F16C 7/00 (2006.01); F16C 7/02 (2006.01)i
CPC: F16C 7/023

According to International Patent Classification (IPC) or to both national classification and IPC

**B.     FIELDS SEARCHED**

Minimum documentation searched (classification system followed by classification symbols)

F16C
CPC: F16C

Documentation searched other than minimum documentation to the extent that such documents are included in the fields searched

Banco de patentes do INPI/BR, site YOUTUBE.

Electronic data base consulted during the international search (name of data base and, where practicable, search terms used)

DERWENT INNOVATION.

**C.     DOCUMENTS CONSIDERED TO BE RELEVANT**

| Category* | Citation of document, with indication, where appropriate, of the relevant passages | Relevant to claim No. |
|---|---|---|
| X | DE 102009004434 B3 (SIEGFRIED MEYER STIFTUNG  [DE]) 21 October 2010 (2010-10-21)<br>Abstract; figures 3,5,6,7. | 1 - 21 |
| X | BR 132020026385 E2 (ANTÔNIO DARIVA  [BR]) 28 June 2022 (2022-06-28)<br>Abstract; figures 1-9. | 1 - 21 |
| A | BR 102013024850 A2 (DARIVA ANTÔNIO  [BR]) 27 October 2015 (2015-10-27)<br>The whole document | 1 - 21 |
| A | WO 2016029282 A1 (DARIVA ANTÔNIO  [BR]) 03 March 2016 (2016-03-03)<br>The whole document | 1 - 21 |
| A | BR 102015019394 B1 (ANTONIO DARIVA  [BR]) 22 December 2020 (2020-12-22)<br>The whole document | 1 - 21 |
| A | EP 1462640 A2 (MEYER SIEGFRIED  [DE]) 29 September 2004 (2004-09-29)<br>The whole document | 1 - 21 |

☑ Further documents are listed in the continuation of Box C.          ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **14 December 2023** | **29 December 2023** |

| Name and mailing address of the ISA/BR | Authorized officer |
|---|---|
| **Instituto Nacional da Propriedade Industrial (Brasil)**<br>**Rua Mayrink Veiga, 9, 6º andar, CEP 20.090-910 Rio de Janeiro – RJ**<br>**Brazil** | **Rafael Fiorencio Mendonça** |
| Telephone No. **(55 21) 3037-3742, 3037-3984** | Telephone No. **552130374528** |

Form PCT/ISA/210 (second sheet) (July 2022)

## INTERNATIONAL SEARCH REPORT

| International application No. |
| :--- |
| **PCT/BR2023/050306** |

### C.    DOCUMENTS CONSIDERED TO BE RELEVANT

| Category* | Citation of document, with indication, where appropriate, of the relevant passages | Relevant to claim No. |
| :---: | :--- | :---: |
| A | DE 102007000762 A1 (TOYOTA MOTOR CO LTD  [JP]) 24 April 2008 (2008-04-24)<br>    The whole document | 1 - 21 |
| A | WO 9530826 A1 (CHO SANG YEON  [KR]) 16 November 1995 (1995-11-16)<br>    The whole document | 1 - 21 |
| A | WO 0049300 A1 (FOALE MAXWELL RICHARDS  [AU]) 24 August 2000 (2000-08-24)<br>    The whole document | 1 - 21 |
| A | JP 2010230102 A (TOYOTA MOTOR CORP) 14 October 2010 (2010-10-14)<br>    The whole document | 1 - 21 |

Form PCT/ISA/210 (second sheet) (July 2022)

**INTERNATIONAL SEARCH REPORT**
Information on patent family members

International application No.

**PCT/BR2023/050306**

| Patent document cited in search report | | | Publication date (day/month/year) | Patent family member(s) | | | Publication date (day/month/year) |
|---|---|---|---|---|---|---|---|
| DE | 102009004434 | B3 | 21 October 2010 | WO | 2010081456 | A1 | 22 July 2010 |
| BR | 132020026385 | E2 | 28 June 2022 | NONE | | | |
| BR | 102013024850 | A2 | 27 October 2015 | NONE | | | |
| WO | 2016029282 | A1 | 03 March 2016 | BR | 102014021151 | A2 | 22 March 2016 |
| BR | 102015019394 | B1 | 22 December 2020 | NONE | | | |
| EP | 1462640 | A2 | 29 September 2004 | EP | 1462640 | A3 | 27 August 2008 |
| | | | | US | 2004187837 | A1 | 30 September 2004 |
| | | | | US | 6935299 | B2 | 30 August 2005 |
| DE | 102007000762 | A1 | 24 April 2008 | JP | 2008082522 | A | 10 April 2008 |
| | | | | US | 2008078353 | A1 | 03 April 2008 |
| WO | 9530826 | A1 | 16 November 1995 | AU | 2420595 | A | 29 November 1995 |
| | | | | KR | 950033005 | A | 22 December 1995 |
| | | | | KR | 960012349 | B1 | 18 September 1996 |
| WO | 0049300 | A1 | 24 August 2000 | NONE | | | |
| JP | 2010230102 | A | 14 October 2010 | NONE | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2442912
- CN 2373616
- KR 20030033528
- WO 2009100586 A
- US 6460505 B
- US 4945866 A